# Europäisches Patentamt
# European Patent Office
# Office européen des brevets

(19)

(11) Numéro de publication: **0 029 781**
**B1**

(12)

# FASCICULE DE BREVET EUROPEEN

(45) Date de publication du fascicule du brevet:
09.02.83

(51) Int. Cl.³: **G 21 C 13/02**

(21) Numéro de dépôt: 80401660.8

(22) Date de dépôt: **19.11.80**

(54) Dispositif de fermeture pour limiter les courants de convection dans un espace annulaire autour d'un composant d'un réacteur nucléaire.

(30) Priorité: **23.11.79 FR 7928879**

(43) Date de publication de la demande:
**03.06.81 Bulletin 81/22**

(45) Mention de la délivrance du brevet:
**09.02.83 Bulletin 83/6**

(84) Etats contractants désignés:
**BE DE GB IT LU NL**

(56) Documents cités:
**FR-A-2 045 605**
**FR-A-2 232 042**
**FR-A-2 269 774**
**GB-A-878 940**
**GB-A-1 001 301**
**US-A-2 991 905**
**US-A-3 324 007**

(73) Titulaire: **NOVATOME, 20 Avenue Edouard Herriot,
F-92350 Le Plessis Robinson (FR)**

(72) Inventeur: **Cornu, Bernard, 7 Résidence La Faisanderie,
F-78340 Les Clayes-sous-Bois (FR)**
Inventeur: **Pierrey, Jean-Louis, 7 rue du 8 Mai 1945,
F-92340 Bourg La Reine (FR)**

(74) Mandataire: **Bouget, Lucien et al,
CREUSOT-LOIRE 15 rue Pasquier, F-75383 Paris
Cedex 08 (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Dispositif de fermeture pour limiter les courants de convection dans un espace annulaire autour d'un composant d'un réacteur nucléaire

L'invention concerne un dispositif de fermeture pour limiter les courants de convection dans un espace annulaire autour d'un composant d'un réacteur nucléaire à neutrons rapides refroidi par un métal liquide comportant une cuve fermée par une dalle horizontale de grande épaisseur dans laquelle sont ménagées des traversées cylindriques verticales pour le passage de composants amovibles disposés verticalement dans le réacteur et reposant sur la dalle.

De tels composants sont, par exemple, des composants de très grandes dimensions tels que la pompe primaire, l'échangeur intermédiaire ou la tubulure de préchauffage du fluide caloporteur ou des composants de plus petites dimensions tels que le dispositif de purification intégré du fluide caloporteur.

Dans tous les cas ces composants doivent être amovibles pour permettre leur remplacement ou leur réparation après un certain temps de fonctionnement du réacteur.

Les composants pénètrent verticalement dans la cuve du réacteur renfermant le métal liquide, généralement du sodium liquide, au niveau de traversées ménagées dans la dalle du réacteur.

Pour faciliter la manutention des éléments on prévoit des traversées d'un diamètre assez largement supérieur au diamètre du composant, si bien qu'il existe un espace annulaire d'une largeur relativement importante entre la surface externe du composant au niveau où ce composant traverse la dalle et la surface interne de la traversée constituée par une virole cylindrique fixée dans une ouverture de la dalle.

L'étanchéité entre le composant et la cuve du réacteur, lorsque le composant est en place, est réalisée par des joints d'étanchéité au niveau de la partie supérieure élargie du composant reposant sur la dalle.

Il est nécessaire alors de limiter les courants de convection entre l'intérieur de la cuve renfermant du sodium liquide et la partie supérieure du composant reposant sur la dalle, à l'intérieur de l'espace annulaire entre composant et traversée pour éviter un échauffement inadmissible de la structure de supportage. Il importe également de limiter le plus possible la circulation de vapeur de sodium jusqu'au niveau supérieur du composant la circulation de vapeur de sodium jusqu'au niveau supérieur du composant afin d'éviter un blocage par le sodium de ce composant lors de son extraction.

On a donc imaginé de disposer sur la surface interne de la virole constituant la traversée de la dalle et sur tout son pourtour un godet annulaire à l'intérieur duquel une virole solidaire de la surface externe du composant vient se placer. Lorsque le composant est mis en position de service dans le réacteur.

Lorsqu'on remet le réacteur en fonctionnement, le godet annulaire se remplit de sodium liquide dont les vapeurs viennent se condenser dans ce récipient creux disposé dans une zone plus froide que le volume interne de la cuve.

De cette manière la virole solidaire du composant trempe dans un métal liquide ce qui crée une barrière pour les courants convectifs et les remontées de vapeur de sodium.

Cependant, lors de la mise en place du composant, la mise en place de la virole solidaire du composant à l'intérieur du godet annulaire est une opération délicate au cours de laquelle on risque de déformer ou de détruire la virole et le godet annulaire. Il en serait d'ailleurs de même si le godet était solidaire de la surface externe du composant et la virole solidaire de la traversée de la dalle. Un joint d'étanchéité de ce type est représenté dans le GB-A-878 940. Des joints d'étanchéité aux fluides utilisés dans des réacteurs nucléaires sont décrits dans les documents FR-A-2 045 605, US-A-2 991 905 et US-A-3 324 007.

Le but de l'invention est donc de proposer un dispositif de fermeture pour limiter les courants de convection dans un espace annulaire autor d'un composant d'un réacteur nucléaire à neutrons rapides refroidi par un métal liquide, comportant une cuve fermée par une dalle horizontale de grande épaisseur dans laquelle sont ménagées des traversées cylindriques verticales pour le passage de composants amovibles disposés verticalement dans le réacteur et reposant sur la dalle, chacun de ces composants ménageant entre sa surface externe et la surface interne de la traversée correspondante un espace annulaire d'une certaine largeur dans lequel est placé le dispositif de fermeture du type comportant un godet annulaire solidaire du composant entourant sa paroi externe et renfermant un liquide dans lequel trempe une virole pour assurer la fermeture de l'espace annulaire autour du composant, ce dispositif devant permettre de limiter les courants de convection et les remontées de sodium à l'intérieur du passage annulaire tout en évitant de compliquer les manoeuvres de manutention du composant pour sa mise en place ou pour son démontage.

Dans ce but, le dispositif comporte en outre:
— une surface d'appui tronconique ayant pour axe l'axe vertical commun au composant et à la traversée, fixée suivant le périmètre de sa grande base à la traversée, et ayant sa petite base disposée à un niveau inférieur ou niveau de la grande base, d'un diamètre supérieur au diamètre extérieur du godet,
— et un élément de fermeture à symétrie de révolution non relié au godet et à la surface d'appui comportant une partie supérieure destinée à venir reposer sur la surface d'appui pour fermer totalement l'espace annulaire vers le haut lorsque le composant est mis en place dans le réacteur, le godet étant alors en-dessous de la surface d'appui, et une partie dirigée vers le bas constituée par la virole reposant dans le godet lors des manutentions du composant et assurant la fermeture de l'espace annulaire vers le bas, lorsque le réacteur est en service, le godet se remplissant alors de métal liquide.

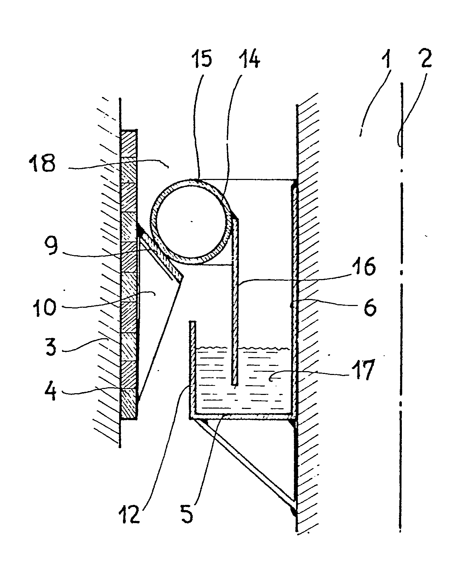

Afin de bien faire comprendre l'invention, on va décrire à titre d'exemple non limitatif, en se référant à la figure unique jointe en annexe un mode de réalisation du dispositif suivant l'invention.

La figure unique représente une demi-vue en coupe de la partie d'un composant disposée au niveau d'une traversée de la cuve d'un réacteur à neutrons rapides et du dispositif de fermeture suivant l'invention.

Sur la figure, on voit le composant 1 de forme sensiblement cylindrique disposé à intérieur d'un espace cylindrique ménagé dans la dalle 3 d'un réacteur nucléaire à neutrons rapides.

L'ouverture cylindrique de la dalle limitée par une virole cylindrique 4 et le composant 1 ont pour axe de symétrie commun l'axe vertical 2 lorsque le composant est en place comme représenté sur la figure unique.

Sur la surface externe du composant et tout autour de ce composant est disposé un godet annulaire 5 dont la paroi verticale disposée vers l'intérieur 6 est soudée sur le corps du composant.

Sur la surface interne de la virole 4 dirigée vers le composant est soudé un élément d'appui tronconique 9 sur le périmètre de sa grande base disposée vers le haut.

L'axe de l'élément tronconique 9 est confondu avec l'axe 2 commun à la traversée et au composant.

Cet élément 9 est maintenu rigidement par un ensemble d'équerres de soutien telles que 10 fixées sur la virole 4.

Le diamètre de la petite base disposée vers le bas de cet élément tronconique est supérieur au diamètre extérieur du godet c'est-à-dire au diamètre de la virole 12 constituant la paroi externe du godet.

L'élément de fermeture 14 complétant le dispositif est constitué par un anneau torique 15 reposant sur la surface supérieure de l'élément tronconique 9 constituant la surface d'appui et une virole 16 soudée sur cet anneau torique, de façon que l'ensemble de l'élément de fermeture 14 présente une symétrie de révolution par rapport à l'axe 2.

Sur la figure unique, les éléments constituant le dispositif de fermeture sont figurés dans leur position où cette fermeture est réalisée, le réacteur nucléaire étant en fonctionnement.

Des vapeurs de sodium sont alors venues depuis la parties de la cuve renfermant le sodium liquide jusque dans l'espace annulaire pour se condenser dans le godet 5 et constituer un joint de métal liquide 17 dans lequel trempe la partie inférieure de la virole 16.

La partie inférieure de l'espace annulaire est ainsi isolée de la partie supérieure de cet espace se trouvant au-dessus du dispositif de fermeture puisque l'anneau 15 repose sur la surface supérieure de l'élément tronconique 9 et assure une certaine étanchéité qui permet d'éviter la circulation trop intense de courants de convection et de vapeurs de sodium depuis la partie inférieure jusqu'à la partie supérieure de l'espace annulaire 18 dans laquelle est envoyé de l'argon pour assurer l'étanchéité.

Lorsqu'on démonte le composant 1 et qu'on soulève ce composant suivant la direction de l'axe 2, le dispositif de fermeture 14 vient reposer par l'intermédiaire de la partie inférieure de la virole 16 sur le fond du godet 5. L'ensemble du dispositif 14 est alors soulevé au-dessus de l'élément d'appui tronconique 9.

Lors de la remise en place du composant 1 aucune précaution spéciale n'est à prendre puisque, lorsque le composant descend dans sa position de service, le dispositif 14 vient en position sur l'élément d'appui 9 et se centre automatiquement par l'intermédiaire de l'anneau torique et de la surface tronconique d'appui.

Lors de la montée en puissance du réacteur consécutive à son démarrage, des vapeurs de sodium viennent au niveau du godet 5 et remplissent à nouveau ce godet pour constituer un joint de métal liquide 17.

Les principaux avantages de l'invention, ainsi qu'il est visible, sont donc que le dispositif de fermeture présente une bonne efficacité, qu'il se place correctement et automatiquement lors de la manutention du composant, que sa mise en place est ainsi très facile et que d'autre part il permet de s'affranchir des problèmes relatifs à la dilatation et au déplacement du composant par rapport à la traversée.

Mais l'invention ne se limite pas au mode de réalisation qui vient d'être décrit; elle en comporte au contraire toutes les variantes.

C'est ainsi que le godet peut avoir une forme quelconque, sa section par un plan méridien visible sur la figure unique n'étant pas forcément carrée ou rectangulaire.

Le dispositif de fermeture 14 à symétrie de révolution autour de l'axe 2 peut également avoir une forme différente de celle qui est représentée sur la figure et en particulier la virole 16 peut présenter une partie tronconique se raccordant à une partie cylindrique.

La partie supérieure du godet peut également comporter une surface d'appui ou de guidage pour le dispositif de fermeture lors de la mise en place du composant.

Enfin le dispositif suivant l'invention s'applique dans les cas de tous les réacteurs nucléaires refroidis par un métal liquide.

**Revendications**

1. Dispositif de fermeture pour limiter les courants de convection dans un espace annulaire (18) autour d'un composant (1) d'un réacteur nucléaire refroidi par un métal liquide, comportant une cuve fermée par une dalle horizontale de grande épaisseur dans laquelle sont ménagées des traversées cylindriques verticales pour le passage de composants amovibles disposés verticalement dans le réacteur et reposant sur la dalle, chacun des composants ménageant entre sa surface externe et la surface interne de la traversée en espace annulaire (18) d'une certaine largeur dans lequel est placé le dispositif de fermeture du type comportant un godet annulaire (5) solidaire du composant (1) entourant sa paroi externe et renfermant un liquide dans lequel trempe une virole (16) pour assurer la fermeture de l'espace annulaire (18) autour du composant (1) caractérisé par le fait qu'il comporte en outre:

— une surface d'appui tronconique (9) ayant pour axe, l'axe vertical commun au composant et à la traversée, fixée suivant le périmètre de sa grande base à la traversée et ayant sa petite base disposée à un niveau inférieur au niveau de la grande base, d'un diamètre supérieur au diamètre extérieur du godet (5),

— et un élément de fermeture (14) à symétrie de révolution non relié au godet (5) et à la surface d'appui (9) comportant une partie supérieure (15) destinée à venir reposer sur la surface d'appui (9) pour fermer totalement l'espace annulaire (18) vers le haut lorsque le composant est mis en place dans le réacteur, le godet (5) étant alors en-dessous de la surface d'appui (9) et une partie dirigée vers le bas constituée par la virole (16) reposant dans le godet (5) lors des manutentions du composant (1) et assurant la fermeture de l'espace annulaire (18) vers le bas, lorsque le réacteur est en service, le godet (5) se remplissant alors de métal liquide.

2. Dispositif de fermeture suivant la revendication 1, caractérisé par le fait que la virole (16) constituant la partie inférieure de l'élément de fermeture (14) comporte une partie cylindrique et une partie tronconique.

**Patentansprüche**

1. Verschließvorrichtung zur Begrenzung der Konvektionsströmen in einem kreisförmigen eine Komponente (1) umgebenden Raum (18) eines mittels einem flüssigen Metall gekühlten Kernreaktors mit einem durch eine dicke horizontale Platte verschlossenen Behälter, die senkrechte zylindrische Durchführungen für den Durchgang von herausnehmbaren, in dem Kernreaktor senkrecht angeordneten und auf der Platte aufliegenden Komponenten aufweist, wobei zwischen der jeweiligen Komponentenaußenfläche und der Durchführungsinnenfläche ein kreisförmiger Raum (18) von bestimmter Breite zwecks Anordnung der Verschließvorrichtung gebildet wird, die eine kreisförmige, an der Komponente (1) befestigte, deren Außenwand umgebende, mit einer Flüssigkeit gefüllten Wanne (5) aufweist, in die ein Mantel (16) eintaucht zum Verschließen des die Komponente (1) umgebenden kreisförmigen Raumes (18), dadurch gekennzeichnet, daß sie außerdem umfaßt:

— eine kegelstumpfartige Auflagefläche (9), deren Achse in der senkrechten der Komponente und der Durchführung gemeinsamen Achse liegt, die gemäß dem Umfang der großen Grundfläche an der Durchführung befestigt ist, und deren kleine Grundfläche unter der großen Grundfläche liegt, mit einem größeren Durchmesser als der Außendurchmesser der Wanne (5),

— und ein drehsymmetrisches mit der Wanne (5) und der Auflagefläche (9) nicht verbundenes Verschließorgan (14) mit einem auf der Auflagefläche (9) zur Auflage kommendes Oberteil (15) um den kreisförmigen Raum (18) vollständig nach oben hin zu verschließen, wenn die Komponente (1) in dem Kernreaktor angeordnet wird, wobei die Wanne (5) dann unter der Auflagefläche (9) liegt, und mit einem nach unten hin gerichtetes aus dem Mantel (16) bestehendes Teil, der bei der Handhabung der Komponente (1) in der Wanne (5) aufliegt und den kreisförmigen Raum (18) nach unten verschließt, wenn der Kernreaktor in Betrieb ist, wobei die Wanne (5) mit flüssigem Metall gefüllt wird.

2. Vorrichtung nach Anspruch 1, dadurch gekennzeichnet, daß der das Unterteil des Verschließorgans (14) bildende Mantel (16) ein zylindrisches Teil und ein kegelstumpfartiges Teil aufweist.

**Claims**

1. Closing device for limiting convection currents in an annular space (18) around a component (1) of a nuclear reactor cooled by a liquid metal, comprising a vessel closed off by a horizontal slab of great thickness in which vertical cylindrical through passages are provided for the passage of releasable components arranged vertically in the reactor and resting on the slab, each one of the components providing, between its outer surface and the internal surface of the through passage, an annular space (18) of a certain width in which is placed the closing device of the type including an annular cup-like member (5) rigidly fixed to the component (1) surrounding its outer wall and containing a liquid into which a sleeve (16) dips for providing closing off of the annular space (18) around the component (1), characterized by the fact that it further includes:

— an abutment surface (9) in the shape of a truncated cone, the axis of which is the vertical axis common to the component and the through passage, fixed along the perimeter of its larger base to the passage means and having its smaller base arranged at a lower level than the level of its larger base, of a diameter greater than the outer diameter of the cup-like member (5),

— and a closure element (14) possessing symmetry of revolution, not joined to the cup-like member (5) and the abutment surface (9), and having an upper part (15) adapted to rest on the abutment surface (9) for completely closing off the annular space (18) at the top when the component is inserted in place in the reactor, the cup-like member (5) being then below the abutment surface (9), and a downwardly directed portion constituted by the sleeve (16) and which rests in the cup-like member (5) during handling operations of the component (1) and providing closing off of the annular space (18) at the bottom when the reactor is in service, the cup-like member (5) being, in this case, filled with liquid metal.

2. Closure device in accordance with claim 1, characterized by the fact that the collar (16) constituting the lower portion of the closure element (14) includes a cylindrical portion and a portion in the shape of a truncated cone.